# EUROPEAN PATENT SPECIFICATION

(11) **EP 1 677 201 B1**
(45) Date of publication and mention of the grant of the patent: **06.05.2009**
(21) Application number: 05028446.2
(22) Date of filing: 23.12.2005
(51) Int. Cl.: G06F 12/08

(54) **Common cache management in a plurality of virtual machines**
Gemeinsame Cachespeicher-Verwaltung bei einer vielzahl virtueller Maschinen
Gestion commune d'antémémoire dans une pluralité de machines virtuelles

(30) Priority: 28.12.2004 US 25482
(43) Date of publication of application: 05.07.2006
(73) Proprietor: SAP AG, 69190 Walldorf (DE)
(72) Inventor: Kilian, Frank, 68199 Mannheim (DE); Rohland, Hans-Christoph, 68789 St. Leon-Rot (DE); Petev, Petio, 1000 Sofia (BG); Wintergerst, Michael, SAP AG, 69190 Walldorf (DE)
(74) Representative: Müller-Boré & Partner Patentanwälte

(56) References cited:
- WO-A-00/23898
- NO AUTHOR NAME SUPPLIED IN SOURCE DATA: "Shared disk I/O cache" IP.COM JOURNAL, IP.COM INC., WEST HENRIETTA, NY, US, 29 January 2004 (2004-01-29), XP013014199 ISSN: 1533-0001

## Description

### BACKGROUND

### Field

Embodiments of the invention relate to caching. More specifically, embodiments of the invention relate to shared caching with common monitoring.

### Background

Within a typical virtual machine (VM) each component maintains its own cache infrastructure. As used herein, "component" refers generically to managers, services, and applications that may execute within the VM. Because each component maintains its own cache infrastructure and its own cache implementation, there is no common control of the cache. As the number of VMs in the system becomes arbitrarily large, a memory footprint of each successive VM increases the systems memory footprint proportionally. Additionally, there is no basis for common monitoring and administration nor is it possible to share objects and data between components in different VMs. Moreover, because the cache states are not globally visible, it is not possible to obtain an overview of cooperation and operation of different caches in a particular environment. Moreover, in the event that a VM fails, all information about the cache usage is lost. It would be desirable to develop a flexible system having shared cache usage and common monitoring.

The document "Shared disk I/O cache", IP.COM Journal, IP.COM Inc., West Henrietta, NY, US, 29 January 2004, XP013014199, ISSN: 1533-0001 discloses a method for virtual machines sharing data in a storage area network and sharing an external cache memory. Herein, an external memory is mapped into the address spaces of several virtual machines and the shared memory contains cache management data. As the amount of free storage goes below a configurable limit, an eviction policy is carried out in the complete cache, wherein objects that have not been referenced recently are evicted.

### SUMMARY

A system and method of common cache management as claimed is disclosed. Plural VMs each have a cache infrastructure component used by one or more additional components within the respective VM. An external cache is provided and shared by the components of each of the VMs. In one embodiment, a shared external memory is provided and populated by the VMs in the system with cache state information responsive to caching activity. This permits external monitoring of caching activity in the system.

### BRIEF DESCRIPTION OF THE DRAWINGS

The invention is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

**Figure 1** is a block diagram of a system of one embodiment of the invention.

**Figure 2** is a block diagram of a system of one embodiment of the invention in a cluster environment.

**Figure 3** is a diagram of a logical representation of a cache region.

**Figure 4** is a block diagram of a system of one embodiment of the invention.

### DETAILED DESCRIPTION

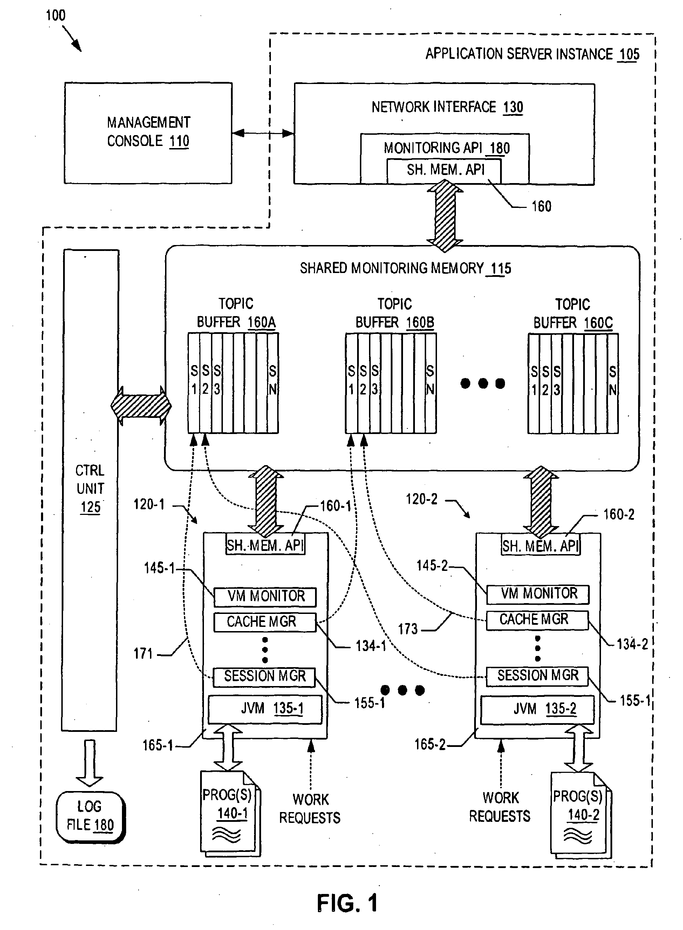

**Figure 1** is a block diagram of a system of one embodiment of the invention. The illustrated embodiment of system 100 includes an application server ("AS") instance 105 and a management console 110. In one embodiment, the management console 110 may be a Microsoft Management Console (MMC). The illustrated embodiment of AS instance 105 includes shared monitoring memory 115, worker nodes 120-1 and 120-2 (collectively 120), a control unit 125, and a network interface 130. Throughout this description, elements of the system are designated generically by a base reference number, and by the base with an extension if reference is to a particular instance of the element. In one embodiment, AS instance 105 represents Java 2 Platform, Enterprise Edition ("J2EE") instance for providing enterprise software functionality. In a J2EE environment, control unit 125 is often referred to as "Jcontrol" and network interface 130 may be implemented with a WebService Based Start Service.

In the illustrated embodiment, worker nodes 120 each include a Java virtual machine ("JVM") 135, one or more internal managers/monitors (e.g., a virtual machine ("VM") monitor 145, a cache manager 134, and a session manager 155), and a shared memory application programming interface ("API") 160 all supported within a native wrapper 165. JVMs 135 interpret and execute Java programs 140 while servicing work requests assigned to the particular worker node 120-1, 120-2. Although Figure 1 illustrates only two worker nodes 120 within AS instance 105, more or fewer worker nodes 120 may be established within AS instance 105 to service the work requests.

During operation of worker nodes 120, the internal managers/monitors (e.g., VM monitor 145, cache manager 134, session manager 155, etc.) update shared monitoring memory 115 with status information. In one embodiment, the status information is logically organized into topic buffers 160A, 160B, and 160C (collectively 160) containing topically related status information from each of worker nodes 120. Each topic buffer 160 may include multiple slots S1-SN, each holding the topically related status information from a respective one of worker nodes 120. Once the status information is stored into shared monitoring memory 115, the status information may be retrieved from shared monitoring memory 115 by network interface 130 and transmitted to management console 110 for display thereon. Using management console 110, an information technology ("IT") technician can remotely monitor the operational health of AS instance 105 in real-time to ensure AS instance 105 remains in a healthful state. Shared monitoring memory 115 working in concert with management console 110, enables the IT technician to make informed decisions when taking preventative and/or remedial action to effectively maintain and manage an enterprise system.

JVMs 135 interpret Java programs 140 by converting them from an intermediate interpreted language (e.g., Java bytecode) into a native machine language, which is then executed. Java programs 140 may be interpreted and executed by JVMs 135 to provide the business, presentation, and integration logic necessary to process the work requests received at AS instance 105. As the work requests are serviced, sessions are setup and taken down, caching occurs, and memory and processor cycles consumed. Shared monitoring memory 115 provides a mechanism by which these operational characteristics of worker nodes 120, as well as others, may be monitored.

VM monitor 145, cache manager 134, and session manager 155 are generators of status information describing the operational status of various aspects of worker nodes 120. Although only three such generators are illustrated in Figure 1, it should be appreciated that worker nodes 120 may include any number of generators of status information to monitor various aspects of worker nodes 120. In many cases, these generators of status information are event based, rather than polled. As such, shared monitoring memory 115 is updated with status information as it is generated, rather than shared monitoring memory 115 polling each worker node 120 for status information. For example, shared monitoring memory 115 may be updated each time a work request is assigned to a particular one of worker nodes 120, in response to session events, in response to cache events, and various other JVM 135 events. Event based updates are less processor intensive since they do not waste processor cycles querying for updates that do not yet exist. Furthermore, updates are more quickly published into shared monitoring memory 115 after the occurrence of an update event providing more up-to-date monitoring data.

Native wrapper 165 provides the runtime environment for JVM 135. In an embodiment where JVM 135 is a JVM compliant with the J2EE standard, native wrapper 165 is often referred to as "JLaunch." Native wrapper 165 is native machine code (e.g., compiled C++) executed and managed by an operating system ("OS") supporting AS instance 105. Once launched, native wrapper 165 establishes JVM 135 within itself. In one embodiment, the generators of status information (e.g., VM monitor 145, thread manager, session manager 155, etc.) are native code components of native wrapper 165. As such, even in the event of a failure of JVM 135, the generators of the status information can still operate providing updates on the failure status of the particular JVM 135. In other embodiments, a generator of status information may indeed be interpreted and executed on JVM 135, in which case a failure of JVM 135 would also terminate the particular generator.

While processing work requests, connections may be established between a client generating the work request and the particular worker node 120 servicing the work request. While the connection is maintained, a session is established including a series of interactions between the two communication end points (i.e., the worker node and the client). In one embodiment, session manager 155 is responsible for the overall managing and monitoring of these sessions, including setting up and taking down the sessions, generating session status information 171, and reporting session status information 171 to an appropriate one of topic buffers 160. For example, topic buffer 160A may be a "session buffer" assigned to store session related status information. In one embodiment, session manager 155 registers a different slot for each session currently open and active on its corresponding one of worker nodes 120.

In one embodiment, cache manager 134 generates cache status information 173 and reports cache status information 173 to an appropriate topic buffer 160. For example, topic buffer 160B may be a "cache buffer" assigned to store cache related status information.

VM monitor 145 may monitor various internal activities of JVM 135. For example, VM monitor 145 may monitor the work load of JVM 135 and report overload situations into shared monitoring memory 115. VM monitor 145 may further monitor an internal heap of JVM 135 and report memory scarce situations into shared monitoring memory 115. VM monitor 145 may even monitor garbage collecting activity within JVM 135 and report over active garbage collecting situations into shared monitoring memory 115. It should be appreciated that any aspect of worker nodes 120 capable of monitoring may be monitored by a generator of status information and the status information copied into a relevant topic buffer 160 and associated slots S1-SN.

The generators of the status information (e.g., session manager 155, thread manager, VM monitor 145, etc.) access shared monitoring memory 115 via shared memory API 160. In one embodiment, shared memory API 160 abstracts access to shared monitoring memory 115 through use of function calls. Each generator of status information that wishes to copy status information into shared monitoring memory 115 makes a "call" to one or more functions published internally to worker nodes 120 by shared memory APIs 160. The generator then passes the generated status information to the called function. In turn, the called function copies the status information into the appropriate slots and topic buffers 160.

In one embodiment, shared monitoring memory 115 is a portion of system memory pre-reserved to store status information. Abstracting access to shared monitoring memory 115 with shared memory APIs 160 insulates and protects the contents of shared monitoring memory 115 from each worker node 120. Should a worker node 120 crash, enter an infinite loop, or otherwise fail, the status information saved into shared monitoring memory 115 may still be protected and preserved from corruption.

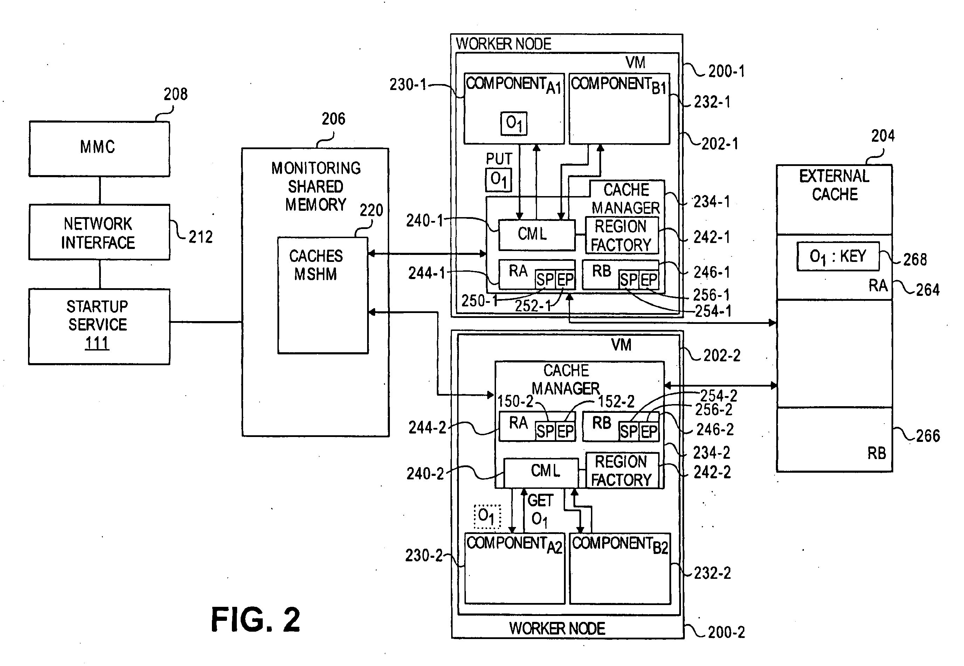

**Figure 2** is a block diagram of a system of one embodiment of the invention in a cluster environment. A set of worker nodes 200 (200-1, 200-2) that might include VM 202-1 and 202-2 (generically VM 202) may share a common external cache 204. In one embodiment, a worker node 200 may be a Java2 Enterprise Edition (J2EE) worker node. It is envisioned that such a system might be implemented on various platforms, such as a J2EE platform, a Microsoft.NET platform, a Websphere platform developed by IBM Corporation and/or an Advanced Business Application Programming (ABAP) platform developed by SAP AG.

VMs 202 include a cache infrastructure component, such as cache manager 234. As noted previously, as used herein "component" generically refers to managers, services, and applications. VM 202 includes one or more additional components, such as component 230 and 232. In one embodiment, a component might be an HTTP service, a session manager, or a business application. In one embodiment, the cache infrastructure component, such as cache manager 234, is shared between all of the additional components (e.g., 230, 232) within the respective VM 202. In one embodiment, cache manager 234 is a core component of a J2EE engine, and worker node 200 is an application server node. As a core component, cache manager 234 is always available to every component sitting on the application server infrastructure.

In one embodiment, cache manager 234 includes a cache management library (CML) 240. In one embodiment, CML 240 is used by additional components 230, 232 within the VMs 202 to access an external cache 204, which is shared among the VMs 202. The CML 240 can be thought of as having two layers: a first layer including a user application programming interface (API) and a cache implementation, both of which are visible to the cache uses such as additional components 230, 232 and a second layer having a set of possible storage plugins and eviction policy plugins. The second layer is not visible to the cache users. Initially, a component such as component_{A1} 230-1 accesses CML 240-1 to obtain a cache region. CML 240 uses region factory 242-1 to generate a cache region 244-1 for component_{A1} 230-1.

A cache region is basically a facade to allow the component to use external cache 204. The cache region is based on a pluggable architecture, which enhances the flexibility of the architecture layer by allowing the use of various storage plugins 250-1, 254-1 and eviction policy plugins 252-1, 256-1. Storage plugin 250-254 are responsible for persisting cache objects. The storage plugin may persist the data in a database or the file system. Different storage plugin may have different policies for persisting cache object, e.g., write through, write back, or spooling. In one embodiment, only a single storage plugin is used for any particular cache region. Eviction policy plugin 252, 256 are responsible for selecting the least important cache content for removal from the cache once a threshold has been exceeded. Two common threshold parameters are total size of object cached and total number of objects cached. Various eviction policies may be employed, such as, first in first out (FIFO), least frequently used (LFU), etc. In one embodiment, a single eviction policy plugin is bound to a region.

Similarly, component B1 232-1 may access CML 240-1 to obtain cache region B 246-1 with associated plugins 254-1 and 256-1 bound thereto. Notably, storage plugin 250-1 and 254-1 need not, but may be the same plugin. Similarly, eviction plugins 252-1 and 256-1 may need not be the same. Thus, for example, region A 244-1 may use write through storage and an LRU eviction policy while region B may use write back storage and a FIFO eviction policy.

After obtaining a cache region, if component_{A1} creates an object O₁ it wishes to cache, component_{A1} 230-1 call a PUT <object> method directed to CML 240-1, which via cache region 244-1 places object O₁ and an associated key in an area of external cache 204 associated with the cache region 244, more specifically, region 264. Concurrently, cache manager 234-1 populates the caches area 220 of monitoring shared memory 206 with cache state information, such as, information from which hit rate, fill rate, number of cache objects, etc. maybe derived. In one embodiment, cache area 220 is analogous to the topic buffer 160B discussed above with respect to Figure 1.

Component_{A2} 230-2 needs object O₁ and may issue a get O₁ command to CML 240-2, which will retrieve object O₁ from the external cache 204 via the accesses point provided by region 244-2 notwithstanding that component_{A2} did not create object O₁. Component_{A2} objects may merely call a GET <object> method with O₁, as the argument and the cached object O₁ will be returned as indicated in the figure and be shared between components in different VMs reducing the need for expensive recreation of objects and reducing the memory required for caching. The foregoing, of course, assumes that component_{A1} 230-1 has already created object O₁ if O₁ is not yet in external cache 204, a cache miss will result from the GET command. Component_{A2} 230-2 will then need to create object O₁ and may cache it as described above. In response to the cache activity, cache manager 234-2 populates the caches area 220 of monitoring shared memory 206 to maintain an accurate global picture of caching activity in external cache 204.

The cache area 220 of shared memory 206 may be accessed by a start up service 211, which is responsible for starting the worker nodes. That information in the shared memory 206 may be made visible to a management console such as, MMC 208 via a network interface 212. This permits ongoing monitoring of the cache state information independent of the health of the worker nodes 200.

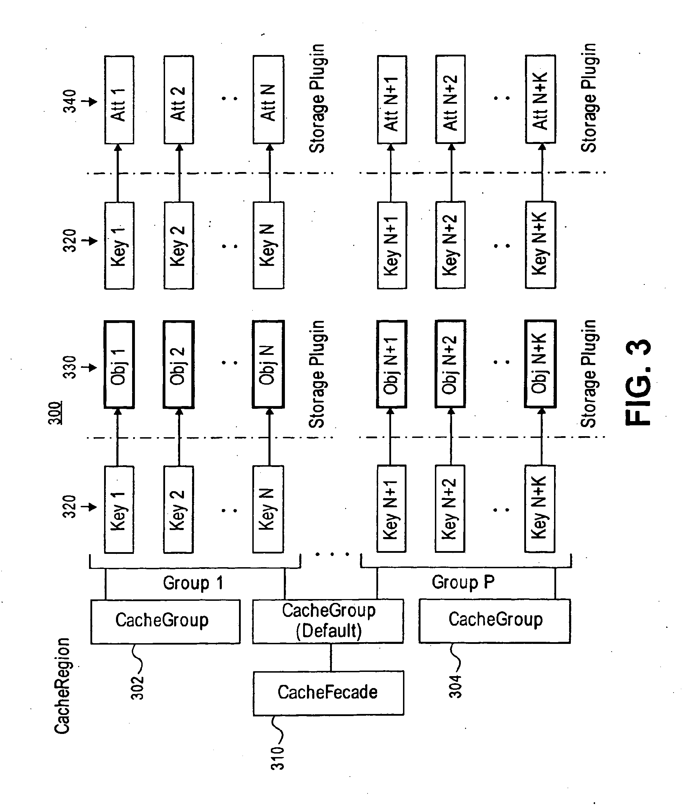

**Figure 3** is a diagram of a logical representation of a cache region. Cache regions are named entities, which provide a single distinctive name space, operation isolation and configuration. Components may acquire a cache region by using a cache region factory, such as, cache region factory 242 of Figure2. Within a cache region, a component can define cache groups identified by names, such as, cache groups 302, 304. The cache groups may be used to perform operations on all objects within the group. Additionally, a cache facade 210, which is the default group, is always provided to permit access to all objects from all groups and all objects, which are not part of a group.

In one embodiment, each cache region has a single storage plugin (e.g., 250-1 of Figure2) and a single eviction policy plugin (e.g., 252-1 of Figure2) bound to the region. A storage plugin implements a mapping between cached object keys 320 and the internal representation of the cached objects 330. In various embodiments, cached objects 330 may be internally represented as a shared closure in shared memory, binary data on a file system or merely the same object. The component can bind the same keys 320 to attributes 340, which were maintained using the cache storage plugin bound to the cache region. In one embodiment, the attributes are sets of Java maps that contain string-to-string mappings. The attributes may subsequently be used by the component as a pattern for removal or invalidation of a set of objects.

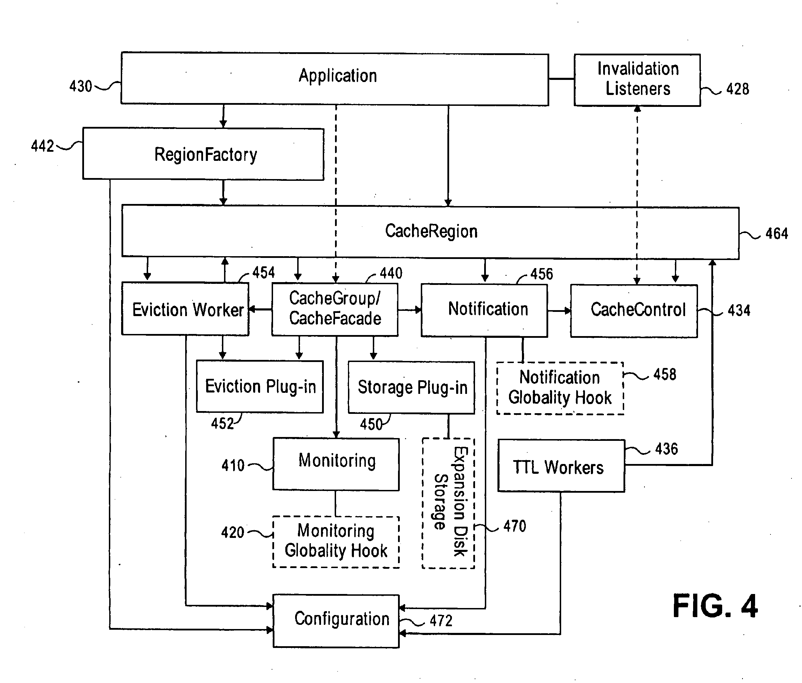

**Figure 4** is a block diagram of a system of one embodiment of the invention. A component, such as, application 430 creates a cache region 464 using a region factory 442. In the creation of the region, cache facade 440 is bound to a storage plugin 450 and an eviction policy plugin 452. From cache region 464, application 430 can acquire cache groups or a cache facade 440, which provides access to a group or all cached objects. Initially before any groups are created, only cache facade (the default group) is available for the region. When objects are added to the cache, eviction worker 454 is notified. Eviction worker 454 may then poll the eviction plugin 452 to determine what object to remove from the cache if applicable thresholds have been exceeded. In one embodiment, eviction worker 454 then calls cache region 464 to advise of the eviction. Cache region 464 delegates the eviction to cache facade 440 to reflect it on the storage plugin 450.

Time to live (TTL) workers 436 provide automatic eviction from the cache of object that have remained in the cache for a particular amount of time. In one embodiment, that time can be set on a group-by-group basis and is retained as an element in the configuration 472.

In one embodiment, the application 430 requires cache control 434 from the cache region 464. Once application 430 has acquired cache control 434, it can invalidate cached objects through the cache control 434 and can register invalidation listeners 428 in cache control 434. Once registered, invalidation listeners 428 will be notified about invalidation of cached objects. Invalidation includes modification, explicit invalidation or removal. Notification may occur in two ways. First, the application 430 may explicitly invalidate a cached object key through cache control 434. Alternatively, an application 430 modifies or removes a cached object using a cached object key. The cache group or cache facade 440 signals local notification instance 456, which is bound to the cache region 464 about this invalidation event. Local notification instance 456 informs cache control 434, which in turn notifies registered invalidation listeners 428.

Additionally, local notification instance 456 may use notification globality hook 458 to distribute invalidation messages to other nodes in a cluster. Whether a particular notification is distributed globally may depend on the configuration 472 of cache region 464. If the region is configured to only provide a local notification, the globality hook will not be notified about invalidation messages. Conversely, if configuration 472 indicates that invalidation should be made globally visible, the notification globality hook 458 is notified of invalidation messages and propagates them to external nodes.

The application 430 may use the cache groups or cache facade 440 to access a cache, (such as, external cache 204 of Figure2). As a result of such accesses, eviction workers 454, eviction plugin 452, monitoring module 410 and notification instance 456 are implicitly informed of modifications and changes to the cache. Monitoring module 410 has an associate monitoring globality hook 420. When monitoring module 410 is informed of an operation, it may use the monitoring globality hook 420 to write monitoring data to an external storage (such as, cache areas 220 of shared memory 206 of Figure2), a file system, database, etc. In one embodiment, monitoring module 410 retains various cache state information, such as, shown in Table 1.

**TABLE 1**

| Name | Description |
|---|---|
| SIZE | Total size of Cached Objects in bytes |
| ATTRIBUTES_SIZE | Total size of Cached Objects Attributes in bytes |
| NAMES_SIZE | Total size of Cached Objects Keys in bytes |
| COUNT | Total count of Cached Objects |
| PUTS | Total number of put operations executed |
| MODIFICATIONS | Number of put operations that have been modifications (successive put with same key) |
| REMOVALS | Total number of remove operations executed |
| EVICTIONS | Total number of eviction operations executed |
| UTILIZATION | The maximum value of count variable reached by far |
| GETS | Total number of get operations executed |
| CACHE_HITS | Total number of successful get operations executed |

In one embodiment, this cache state information is largely a set of counter values entered by the storage plugin 450 bound to the cache region 464 or obtained from the cache implementation, e.g., NAMES_SIZE. More complex state information may be derived externally. For example, hit rate based on cache hits and gets or cache mutability based on modifications and puts. By making this information globally available an overview of cooperation between various caches in an environment may be obtained. Additionally, cache state information remains available even if the caching VM fails.

Elements of embodiments may also be provided as a machine-readable medium for storing the machine-executable instructions. The machine-readable medium may include, but is not limited to, flash memory, optical disks, CD-ROMs, DVD ROMs, RAMs, EPROMs, EEPROMs, magnetic or optical cards, propagation media or other type of machine-readable media suitable for storing electronic instructions. For example, embodiments of the invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

In the foregoing specification, the invention has been described with reference to specific embodiments thereof. It will, however, be evident that various modifications and changes can be made thereto without departing from the scope of the invention as set forth in the appended claims. The specification and drawings are, accordingly, to be regarded in an illustrative rather than a restrictive sense.

## Claims

1. A system comprising:
- a first virtual machine VM (202-1) and a second VM (202-2), each VM (202) having a cache infrastructure component (234), each cache infrastructure component (234) to be used by at least one additional component (230, 232) within the respective VM (202); and
- a cache (204) external to either VM (202) and shared by both VM's (202),
**characterized in that** the cache infrastructure component (234) comprises:
an interface between each additional component (230, 232) and the external cache (204), the interface comprising a plurality of regions (244, 246), a first region (244-1, 246-1) assigned to a first additional component in the first VM (202-1) and a second region (244-2, 246-2) assigned to a second additional component in the second VM (202-2), wherein each cache infrastructure component (234) comprises at least one eviction plugin (252, 256) which is configured to apply an eviction policy on a region by region basis, wherein an eviction policy is bound to a region (244, 246), and wherein the eviction policy comprises selecting the least important cache content for removal from the cache (204) once a threshold of cache (204) usage has been exceeded.

2. The system of Claim 1 further comprising:
a shared memory (206) external to the first VM (202-1) and the second VM (202-2), the shared memory to be populated with cache state information to permit common monitoring of the external cache (204).

3. The system of anyone of the preceding claims wherein each cache infrastructure component (234) comprises:
- at least one storage plugin (250, 254) and / or
- a cache management library CML (240) and /or
- a cache region factory (242).

4. The system of anyone of the foregoing claims wherein the first VM (202-1) is a Java VM JVM.

5. A method comprising:
- receiving a request from a first component (230, 232) in a first virtual machine VM (202-1) to register for a region (244, 246) of an external cache (204), which region is defined by an interface between the first component (230, 232) and the external cache (204);
- storing an object in the cache (204) responsive to a command of the first component (230, 232);
**characterized by**:
- assigning a first region (241-1, 246-1) to the first component in the first VM (202-1) and a second region (244-2, 246-2) to a second component in a second VM (202-2); and
- establishing an eviction policy on a region by region basis, wherein an eviction policy is bound to a region (244, 246), and wherein the eviction policy comprises selecting the least important cache content for removal from the cache (204) once a threshold of cache (204) usage has been exceeded.

6. The method of Claim 5 wherein storing comprises:
using the region (244, 246) as an access point to the cache (204).

7. The method of Claim 5 or 6 further comprising:
populating shared memory (206) with cache state information responsive to cache activity.

8. The method of Claim 7 further comprising:
monitoring caching activity outside of a VM(202) performing the activity.

9. A machine-accessible medium containing instructions that, when executed, cause a machine to:
- receive a request from a first component (230, 232) in a first virtual machine VM (202-1) to register for a region (244, 246) of an external cache (204), which region is defined by an interface between the first component (230, 232) and the external cache (204);
- store an object in the cache (204) responsive to a command of the first component (230, 232);
**characterized in that** the instructions further cause the machine to:
- assign a first region (244-1, 246-1) to the first component in the first VM (202-1) and a second region (244-2, 246-2) to a second component in a second VM (202-2); and
- establish an eviction policy on a region by region basis, wherein an eviction policy is bound to a region (244, 246), and wherein the eviction policy comprises selecting the least important cache content for removal from the cache (204) once a threshold of cache (204) usage has been exceeded.

10. The machine accessible medium of Claim 9 further comprising instructions to cause the machine to:
- populate shared memory (206) with cache state information responsive to cache activity and / or
- monitor a state of the cache (204) externally from either the first VM (202-1) or the second VM (202-2).

## Patentansprüche

1. System, das umfasst:
- eine erste virtuelle Maschine VM (202-1) und eine zweite VM (202-2), wobei jede VM (202) eine Cacheinfrastrukturkomponente (234) hat, wobei jede Cacheinfrastrukturkomponente (234) von wenigstens einer zusätzlichen Komponente (230, 232) innerhalb der jeweiligen VM (202) verwendet werden soll; und
- einen Cache (204) außerhalb beider VM (202), der von beiden VMs gemeinsam genutzt wird,
**dadurch gekennzeichnet, dass** die Cacheinfrastrukturkomponente (234) umfasst:
eine Schnittstelle zwischen jeder zusätzlichen Komponente (230, 232) und dem externen Cache (204), wobei die Schnittselle eine Vielzahl von Bereichen (244, 246) umfasst, wobei ein erster Bereich (244-1, 246-1) an eine erste zusätzliche Komponente in der ersten VM (202-1) zugewiesen ist und ein zweiter Bereich (244-2) an eine zweite zusätzliche Komponente in der zweiten VM (202-2) zugewiesen ist, wobei jede Cacheinfrastrukturkomponente (234) wenigstens ein Räumungs-Plug-in (252, 256) umfasst, das aufgebaut ist, um eine Räumungsstrategie auf einer bereichsweisen Basis anzuwenden, wobei eine Räumungsstrategie an einen Bereich (244, 246) gebunden ist und wobei die Räumungsstrategie das Auswählen des am wenigsten wichtigen Cacheinhalts für die Entfernung aus dem Cache (204) umfasst, wenn einmal ein Schwelle für die Nutzung des Caches (204) überschritten wurde.

2. System nach Anspruch 1, das ferner umfasst:
einen gemeinsam genutzten Speicher (206) außerhalb der ersten VM (202-1) und der zweiten VM (202-2), wobei der gemeinsam genutzte Speicher mit Cachezustandsinformationen gefüllt werden soll, um die gemeinsame Überwachung des externen Caches (204) zu erlauben.

3. System nach einem beliebigen der vorangehenden Ansprüche, wobei jede Cacheinfrastrukturkomponente (234) umfasst:
- wenigstens ein Speicher-Plug-in (250, 254) und/oder
- eine Cacheverwaltungsbibliothek CML (240) und/oder
- eine Cachebereichsfactory (242).

4. System nach irgendeinem der vorangehenden Ansprüche, wobei die erste VM (202-1) eine Java-VM, JVM, ist.

5. Verfahren, das umfasst:
- Empfangen einer Anforderung bzw. Anfrage von einer ersten Komponente (230, 232) in einer ersten virtuellen Maschine VM (202-1), um sich für einen Bereich (244, 246) eines externen Caches (204) zu registrieren, wobei der Bereich durch eine Schnittstelle zwischen der ersten Komponente (230, 232) und dem externen Cache (204) definiert ist;
- ansprechend auf einen Befehl von der ersten Komponente (230, 232) Speichern eines Objekts in dem Cache (204);
**gekennzeichnet durch**:
- Zuweisen eines ersten Bereichs (244-1, 246-1) an die erste Komponente in der ersten VM (202-1) und eines zweiten Bereichs (244-2, 246-2) an eine zweite Komponente in einer zweiten VM (202-2); und
- Einrichten einer Räumungsstrategie auf einer bereichsweisen Basis, wobei eine Räumungsstrategie an einen Bereich (244, 246) gebunden ist und wobei die Räumungsstrategie das Auswählen des am wenigsten wichtigen Cacheinhalts für die Entfernung aus dem Cache (204) auswählt, wenn einmal ein Schwelle für die Nutzung des Caches (204) überschritten wurde.

6. Verfahren nach Anspruch 5, wobei das Speichern umfasst:
Verwenden des Bereichs (244, 246) als einen Zugangspunkt zu dem Cache (204).

7. Verfahren nach Anspruch 5 oder 6, das ferner umfasst:
ansprechend auf die Cacheaktivität Füllen des gemeinsam genutzten Speichers (206) mit Cachezustandsinformationen.

8. Verfahren nach Anspruch 7, das ferner umfasst:
Überwachen von Caching- bzw. Zwischenspeicheraktivitäten außerhalb einer VM (202), welche die Aktivität durchführt.

9. Maschenzugreifbares Medium, das Anweisungen enthält, die wenn sie ausgeführt werden, eine Maschine dazu bringen:
- eine Anfrage von einer ersten Komponente (230, 232) in einer ersten virtuellen Maschine VM (202-1) zu empfangen, um sich für einen Bereich (244, 246) eines externen Caches (204) zu registrieren, wobei der Bereich durch eine Schnittstelle zwischen der ersten Komponente (230, 232) und dem externen Cache (204) definiert ist;
- ansprechend auf einen Befehl von der ersten Komponente (230, 232) ein Objekt in dem Cache (204) zu speichern;
**dadurch gekennzeichnet, dass** die Anweisungen die Maschine ferner veranlassen:
- einen ersten Bereich (244-1, 246-1) an die erste Komponente in der ersten VM (202-1) zuzuweisen und einen zweiten Bereich (244-2, 246-2) an eine zweite Komponente in einer zweiten VM (202-2) zuzuweisen; und
- eine Räumungsstrategie auf einer bereichsweisen Basis einzurichten, wobei eine Räumungsstrategie an einen Bereich (244, 246) gebunden ist und wobei die Räumungsstrategie das Auswählen des am wenigsten wichtigen Cacheinhalts für die Entfernung aus dem Cache (204) umfasst, wenn einmal ein Schwelle für die Nutzung des Caches (204) überschritten wurde.

10. Maschinenzugreifbares Medium nach Anspruch 9, das ferner Anweisungen umfasst, um die Maschine dazu zu bringen:
- den gemeinsam genutzten Speicher (206) ansprechend auf Cacheaktivität mit Cachezustandsinformationen zu füllen und/oder
- einen Zustand des Caches (204) außerhalb der ersten VM (202-1) oder der zweiten VM (202-2) zu überwachen.

## Revendications

1. Système comprenant :
- une première machine virtuelle VM (202-1) et une seconde machine virtuelle VM (202-2), chaque machine virtuelle VM (202) ayant un composant d'infrastructure de cache (234), chaque composant d'infrastructure de cache (234) devant être utilisé par au moins un composant additionnel (230, 232) dans la machine virtuelle respective VM (202) ; et
- un cache (204) externe à chaque machine virtuelle VM (202) et partagé par les deux machines virtuelles VM (202),
**caractérisé en ce que** le composant d'infrastructure de cache (234) comprend :
une interface entre chaque composant additionnel (230, 232) et le cache externe (204), l'interface comprenant une pluralité de régions (244, 246), une première région (244-1, 246-1) assignée à un premier composant additionnel dans la première machine virtuelle VM (202-1) et une seconde région (244-2, 246-2) assignée à un second composant additionnel dans la seconde machine virtuelle VM (202-2), dans laquelle chaque composant d'infrastructure de cache (234) comprend au moins un plugin d'éviction (252, 256) qui est configuré pour appliquer une politique d'éviction sur une région par une base de région, dans laquelle une politique d'éviction est liée à une région (244, 246), et dans laquelle la politique d'éviction comprend la sélection du contenu de cache le moins important pour la suppression depuis le cache (204), une fois qu'un seuil de l'usage du cache (204) a été excédé.

2. Système selon la revendication 1, comprenant en outre :
une mémoire partagée (206) externe à la première machine virtuelle VM (202-1) et à la seconde machine virtuelle VM (202-2), la mémoire partagée devant être peuplée avec les informations d'état de cache afin de permettre un monitorage commun du cache externe (204).

3. Système selon l'une quelconque des revendications précédentes, dans lequel chaque composant d'infrastructure (234) comprend :
- au moins un plugin de mémorisation (250, 254), et / ou
- une bibliothèque de gestion de cache CML (240), et / ou
- un créateur de région de cache (242).

4. Système selon l'une quelconque des revendications précédentes, dans lequel la première machine virtuelle VM (202-1) est une machine virtuelle Java JVM.

5. Procédé comprenant :
- la réception d'une requête depuis un premier composant (230, 232) dans une première machine virtuelle VM (202-1) pour l'inscription à une région (244, 246) d'un cache externe (204), ladite région étant définie par une interface entre le premier composant (230, 232) et le cache externe (204) ;
- la mémorisation d'un objet dans le cache (204) en réponse à une instruction du premier composant (230, 232) ;
**caractérisé par** :
- l'assignation d'une première région (244-1, 246-1) au premier composant dans la première machine virtuelle VM (202-1) et d'une seconde région (244-2, 246-2) à un second composant dans une seconde machine virtuelle VM (202-2) ; et
- l'établissement d'une politique d'éviction sur une région par une base de région dans laquelle une politique d'éviction est liée à une région (244, 246), et dans laquelle la politique d'éviction comprend la sélection du contenu de cache le moins important pour la suppression depuis le cache (204), une fois qu'un seuil de l'usage du cache (204) a été excédé.

6. Procédé selon la revendication 5, dans lequel la mémorisation comprend :
l'utilisation de la région (244, 246) comme un point d'accès au cache (204).

7. Procédé selon l'une ou l'autre des revendications 5 et 6, comprenant en outre :
le peuplement de la mémoire partagée (206) avec les informations d'état du cache en réponse à l'activité du cache.

8. Procédé selon la revendication 7, comprenant en outre :
le monitorage des activités d'utilisation du cache à l'extérieur d'une machine virtuelle VM (202) qui accomplit l'activité.

9. Support accessible par une machine et contenant des instructions qui, lorsqu'elles sont exécutées, provoquent que la machine :
- reçoive une requête depuis un premier composant (230, 232) dans une première machine virtuelle VM (202-1) pour l'inscription à une région (244, 246) d'un cache externe (204), ladite région étant définie par une interface entre le premier composant (230, 232) et le cache externe (204) ;
- mémorise un objet dans le cache (204) en réponse à une instruction du premier composant (230, 232) ;
**caractérisé en ce que** les instructions provoquent en outre que la machine :
- assigne une première région (244-1, 246-1) au premier composant dans la première machine virtuelle VM (202-1) et d'une seconde région (244-2, 246-2) à un second composant dans une seconde machine virtuelle VM (202-2) ; et
- établisse une politique d'éviction sur une région par une base de région dans laquelle une politique d'éviction est liée à une région (244, 246), et dans laquelle la politique d'éviction comprend la sélection du contenu de cache le moins important pour la suppression depuis le cache (204), une fois qu'un seuil de l'usage du cache (204) a été excédé.

10. Support accessible par une machine selon la revendication 9, comprenant en outre des instructions qui provoquent que la machine :
- peuple la mémoire partagée (206) avec les informations d'état du cache en réponse à l'activité du cache, et / ou
- surveille un état du cache (204) de manière externe depuis soit la première machine virtuelle VM (202-1), soit la seconde machine virtuelle VM (202-2).
